# EUROPEAN PATENT APPLICATION

(11) **EP 4 665 078 A1**
(43) Date of publication of application: **17.12.2025**
(21) Application number: 23920366.4
(22) Date of filing: 07.02.2023
(51) Int. Cl.: H04W 76/28

(54) **METHOD AND APPARATUS FOR MONITORING, PROCESSING OR SENDING UPLINK INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/074847
(87) International publication number: WO 2024/164154

(57) **Abstract**

Provided in the present disclosure are a method and apparatus for monitoring, processing or sending uplink information, and a readable storage medium, which are applied to the technical field of wireless communications. The method for monitoring uplink information, which is executed by a network device, comprises: monitoring first uplink information on a first carrier in a discontinuous reception (DRX) first time period of the first carrier.

## Description

### TECHNICAL FIELD

The present disclosure relates to the field of wireless communication technology and, in particular, to a method and an apparatus for monitoring, processing or sending uplink information, and a readable storage medium.

### BACKGROUND

To reduce energy consumption of a network device, the network device can use discontinuous reception (DRX). In the DRX technology, two durations are included, where one duration is referred to as a DRX first duration, and the other duration is referred to as a DRX second duration. When using the DRX, the network device does not receive a portion of uplink information during the DRX first duration but receives uplink information normally during the DRX second duration.

The DRX first duration may also be referred to as the DRX-Off duration, the DRX sleep duration, or the DRX power-saving duration.

The DRX second duration may also be referred to as the DRX-On duration or the DRX non-power-saving duration.

### SUMMARY

The present disclosure provides a method and an apparatus for monitoring, processing or sending uplink information, and a readable storage medium.

In a first aspect, there is provided a method for monitoring uplink information performed by a network device. The method includes monitoring first uplink information on a first carrier during a DRX first duration of the first carrier.

In some possible embodiments, the first uplink information includes a physical random access channel (PRACH), and the PRACH is used for performing beam failure recovery on the first carrier.

In some possible embodiments, the first uplink information includes a scheduling request.

In some possible embodiments, a priority of the scheduling request is higher than a first level.

In some possible embodiments, the first uplink information includes dynamically scheduled uplink information.

In some possible embodiments, the dynamically scheduled uplink information includes at least one of:
a dynamically scheduled physical uplink shared channel (PUSCH);
a dynamically scheduled aperiodic channel state information (CSI) report; and
a dynamically scheduled aperiodic sounding reference signal (SRS).

In some possible embodiments, the first uplink information includes a hybrid automatic repeat request acknowledgement (HARQ-ACK) for first downlink information.

In some possible embodiments, the first downlink information includes at least one of:
a semi-persistent scheduled physical downlink shared channel (SPS PDSCH); and
a dynamically scheduled PDSCH.

In some possible embodiments, a priority of the HARQ-ACK is higher than or equal to a second level.

In some possible embodiments, the first carrier corresponds to a secondary cell.

In a second aspect, there is provided a method for processing uplink information performed by a network device. The method includes not monitoring second uplink information on a first carrier during a DRX first duration of the first carrier.

In some possible embodiments, the second uplink information includes a scheduling request.

In some possible embodiments, a priority of the scheduling request is lower than or equal to a first level.

In some possible embodiments, the second uplink information includes periodic uplink information.

In some possible embodiments, the periodic uplink information includes at least one of:
a periodic CSI report;
a periodic type 1 configured grant physical uplink shared channel (CG-PUSCH); and
a periodic SRS.

In some possible embodiments, the second uplink information includes semi-persistent uplink information, and a transmission scheduling of the semi-persistent uplink information has been activated by the network device prior to the DRX first duration of the first carrier.

In some possible embodiments, the method includes not activating the semi-persistent uplink information on the first carrier during the DRX first duration of the first carrier.

In some possible embodiments, the semi-persistent uplink information includes at least one of:
a type 2 CG-PUSCH;
a semi-persistent SRS; and
a semi-persistent CSI report.

In some possible embodiments, the first carrier corresponds to a secondary cell.

In a third aspect, there is provided a method for sending uplink information performed by a user device. The method includes sending first uplink information on a first carrier during a DRX first duration of the first carrier.

In some possible embodiments, the first uplink information includes a PRACH, and the PRACH is used for performing beam failure recovery on the first carrier.

In some possible embodiments, the first uplink information includes a scheduling request.

In some possible embodiments, a priority of the scheduling request is higher than a first level.

In some possible embodiments, the first uplink information includes dynamically scheduled uplink information.

In some possible embodiments, the dynamically scheduled uplink information includes at least one of:
a dynamically scheduled PUSCH;
a dynamically scheduled aperiodic CSI report; and
a dynamically scheduled aperiodic SRS.

In some possible embodiments, the first uplink information includes an HARQ-ACK for first downlink information.

In some possible embodiments, the first downlink information includes at least one of:
an SPS PDSCH; and
a dynamically scheduled PDSCH.

In some possible embodiments, a priority of the HARQ-ACK is higher than or equal to a second level.

In some possible embodiments, the first carrier corresponds to a secondary cell.

In a fourth aspect, there is provided a processing method performed by a user device. The method includes not sending second uplink information on a first carrier during a DRX first duration of the first carrier.

In some possible embodiments, the second uplink information includes a scheduling request.

In some possible embodiments, a priority of the scheduling request is lower than or equal to a first level.

In some possible embodiments, the second uplink information includes periodic uplink information.

In some possible embodiments, the periodic uplink information includes at least one of:
a periodic CSI report;
a periodic type 1 CG-PUSCH; and
a periodic SRS.

In some possible embodiments, the second uplink information includes semi-persistent uplink information, and a transmission scheduling of the semi-persistent uplink information has been activated by a network device prior to the DRX first duration of the first carrier.

In some possible embodiments, the method includes determining that a transmission scheduling of the semi-persistent uplink information during the DRX first duration of the first carrier is deactivated.

In some possible embodiments, the semi-persistent uplink information includes at least one of:
a type 2 CG-PUSCH;
a semi-persistent SRS; and
a semi-persistent CSI report.

In some possible embodiments, the first carrier corresponds to a secondary cell.

In a fifth aspect, there is provided an apparatus for monitoring uplink information. The apparatus is configured in a network device, and includes a transceiving module configured to monitor first uplink information on a first carrier during a DRX first duration of the first carrier.

In a sixth aspect, there is provided a processing apparatus. The apparatus is configured in a network device, and includes a transceiving module configured to not monitor second uplink information on a first carrier during a DRX first duration of the first carrier.

In a seventh aspect, there is provided an apparatus for sending uplink information. The apparatus is configured in a user device, and includes a transceiving module configured to send first uplink information on a first carrier during a DRX first duration of the first carrier.

In an eighth aspect, there is provided a processing apparatus. The apparatus is configured in a user device, and includes a transceiving module configured to not send second uplink information on a first carrier during a DRX first duration of the first carrier.

In a ninth aspect, there is provided an electronic device including a processor and a memory, where the memory is configured to store a computer program, and the processor is configured to execute the computer program to implement the first aspect or any possible design of the first aspect, or the second aspect or any possible design of the second aspect.

In a tenth aspect, there is provided an electronic device including a processor and a memory, where the memory is configured to store a computer program, and the processor is configured to execute the computer program to implement the third aspect or any possible design of the third aspect, or the fourth aspect or any possible design of the fourth aspect.

In an eleventh aspect, there is provided a computer-readable storage medium, where the computer-readable storage medium stores an instruction that, when invoked and executed on a computer, causes the computer to perform the first aspect or any possible design of the first aspect, or the second aspect or any possible design of the second aspect.

In an eleventh aspect, there is provided a computer-readable storage medium, where the computer-readable storage medium stores an instruction that, when invoked and executed on a computer, causes the computer to perform the third aspect or any possible design of the third aspect, or the fourth aspect or any possible design of the fourth aspect.

In a twelfth aspect, there is provided a communication system including a network device and a user device. The network device is configured to perform the first aspect or any possible design of the first aspect, and/or the second aspect or any possible design of the second aspect. The user device is configured to perform the third aspect or any possible design of the third aspect, and/or the fourth aspect or any possible design of the fourth aspect.

In the present disclosure, during the DRX first duration of the first carrier, the network device, in accordance with the energy-saving purpose of the DRX design, does not monitor a portion of uplink information while ensuring the monitoring of the first uplink information. This prevents the inability to receive the first uplink information from affecting the user device, avoids the impact on the performance of the user device due to the application of the DRX, and improves the overall performance of the communication system.

### BRIEF DESCRIPTION OF THE DRAWINGS

The accompanying drawings described herein are used to provide further understanding of the embodiments of the present disclosure, and form a portion of the present application. The schematic embodiments of the embodiments of the present disclosure and their descriptions are used to explain the embodiments of the present disclosure, and do not constitute undue limitations on the embodiments of the present disclosure. In the accompanying drawings:

The accompanying drawings herein are incorporated into the specification and form a portion of the specification, illustrate embodiments compliant with the embodiments of the present disclosure, and are used in conjunction with the specification to explain the principles of the embodiments of the present disclosure.
FIG. 1 is a schematic diagram of an architecture of a wireless communication system provided in an embodiment of the present disclosure.
FIG. 2 is a schematic diagram of DRXs corresponding to different carriers provided in an embodiment of the present disclosure.
FIG. 3 is a flowchart of a method for monitoring uplink information provided in an embodiment of the present disclosure.
FIG. 4 is a flowchart of another method for monitoring uplink information provided in an embodiment of the present disclosure.
FIG. 5 is a flowchart of another method for monitoring uplink information provided in an embodiment of the present disclosure.
FIG. 6 is a flowchart of a method for processing uplink information provided in an embodiment of the present disclosure.
FIG. 7 is a flowchart of another method for processing uplink information provided in an embodiment of the present disclosure.
FIG. 8 is a flowchart of another method for processing uplink information provided in an embodiment of the present disclosure.
FIG. 9 is a structural diagram of an apparatus for sending uplink information provided in an embodiment of the present disclosure.
FIG. 10 is a structural diagram of another apparatus for sending uplink information provided in an embodiment of the present disclosure.
FIG. 11 is a structural diagram of an apparatus for processing uplink information provided in an embodiment of the present disclosure.
FIG. 12 is a structural diagram of another apparatus for processing uplink information provided in an embodiment of the present disclosure.

### DETAILED DESCRIPTION

The embodiments of the present disclosure are further described in conjunction with the accompanying drawings and the Detailed Description.

The exemplary embodiments are described in detail herein, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present disclosure. On the contrary, they are only examples of devices and methods consistent with some aspects of the present disclosure as detailed in the appended claims.

The terms used in the embodiments of the present disclosure are solely for the purpose of describing particular embodiments, but are not intended to limit the embodiments of the present disclosure. The singular forms of "a" and "the" used in the embodiments of the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first indication information may also be referred to as the second indication information, and similarly, the second indication information may also be referred to as the first indication information. Depending on the context, the phrases "if" and "in case" as used herein may be interpreted as "at the time of......", "when ......", or "in response to determining".

The embodiments of the present disclosure are described in detail below, and examples of the embodiments are shown in the accompanying drawings, where the same or similar symbols throughout indicate the same or similar elements. The embodiments described below with reference to the accompanying drawings are exemplary and intended to be used for explaining the present disclosure, and should not be construed as the limitations on the present disclosure.

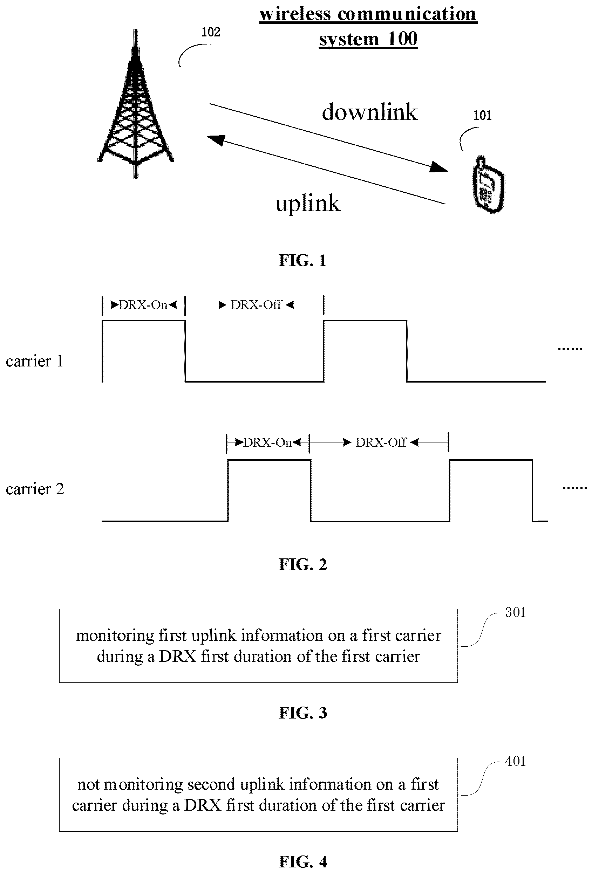

As shown in FIG. 1, the method provided in the embodiments of the present disclosure may be applied to a wireless communication system 100. The wireless communication system may include a user device 101 and a network device 102, where the number of devices included in the wireless communication system is not limited.

It should be understood that the above wireless communication system 100 may be applicable to both low frequency and high frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-generation (5G) system, a new radio (NR) communication system, or a future evolution public land mobile network (PLMN) system, etc.

The user device 101 shown above may be a terminal, an access user device, a user device unit, a user device station, a mobile station (MS), a remote station, a remote user device, a mobile terminal, a wireless communication device, a user device agent, etc. The user device 101 may have a wireless transceiving function, and is capable of communicating (e.g., wirelessly communicating) with one or more network devices of one or more communication systems, and accepting a network service provided by the network device, where the network device herein includes, but is not limited to, the network device 102 illustrated in the drawing.

In some embodiments, the user device 101 may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, an in-vehicle device, a wearable device, a user device in a future 5G network, or a user device in a future evolution PLMN network, etc.

For example, the network device 102 may be an access network device (or referred to as an access network site). In some embodiments, the access network device refers to a device providing a network access function, such as a radio access network (RAN) base station, etc. The network device may specifically include a base station (BS), or include a base station and a radio resource management device configured to control the base station, etc. The network device may further include a relay station (a relay device), an access point, and a base station in the future 5G network, a base station in the future evolution PLMN network, or an NR base station, etc. The network device may be a wearable device or an in-vehicle device. The network device 102 may also be a communication chip with a communication module.

When the network device performs the DRX configuration, the network device may perform the DRX configuration for the carrier. For example, the DRX configuration may be performed separately for different carriers. In an example, as shown in FIG. 2, the network device configures different DRX configuration information for carrier 1 and carrier 2.

After the DRX is configured for a certain carrier, when a certain duration is in the DRX first duration (which may be referred to as the DRX-Off duration) of the carrier, it is called that the carrier is in the DRX-Off state during that duration. Similarly, when a certain duration is in the DRX second duration (or referred to as the DRX-On duration) of the carrier, it is called that the carrier is in the DRX-on state during that duration.

Considering that when the DRX is applied on a certain carrier, some uplink information may not be monitored during the DRX first duration of that carrier in order to achieve the energy-saving purpose of the DRX. However, not monitoring the uplink information may have adverse impacts on the user device.

The embodiments of the present disclosure provide a method for monitoring uplink information. The method is performed by a network device. FIG. 3 is a flowchart of a method for monitoring uplink information illustrated according to an exemplary embodiment. As shown in FIG. 3, the method includes S301.

At S301, first uplink information is monitored on a first carrier during a DRX first duration of the first carrier.

In some possible embodiments, the DRX first duration of the first carrier is the DRX-Off duration of the first carrier.

In some possible embodiments, the first carrier is a single carrier, or the first carrier includes one or more carriers.

In some possible embodiments, the first carrier corresponds to a secondary cell (Scell).

The first carrier does not correspond to a primary cell (Pcell). Since the network device needs to configure, on the Pcell, the physical random access channel (PRACH) for the idle state random access, and needs to periodically detect the PRACH, making it difficult to implement the DRX on the Pcell. Therefore, the DRX is chosen to be implemented on the Scell.

In some possible embodiments, at S301, the first uplink information may include at least one of the following four types of uplink information.

The first type of uplink information is a PRACH.

Optionally, the PRACH is used for performing beam failure recovery on the first carrier.

Considering that when the DRX is applied on the first carrier, if the PRACH is not monitored during the DRX first duration of the first carrier in order to achieve the energy-saving purpose of the DRX, the application of the DRX may increase the wireless link recovery time length, thereby affecting the communication quality.

Therefore, during the DRX first duration of the first carrier, monitoring the PRACH on the first carrier enables a priority of performing the beam failure recovery to be higher than a priority of performing energy saving by using the DRX. This enables that inaccurate beams detected by the user device can be recovered as soon as possible, avoids the situation of increasing the wireless link recovery time length due to the application of the DRX, and improves the overall performance of the communication system.

The second type of uplink information is a scheduling request (SR).

Optionally, the scheduling request is a scheduling request with a priority higher than a first level.

By distinguishing the priorities of the scheduling requests, during the DRX first duration of the first carrier, the scheduling request with a priority higher than the first level is monitored, ensuring that the important scheduling is carried out normally through allowing the transmission of the scheduling request with a high priority.

The third type of uplink information is dynamically scheduled uplink information.

In an example, the dynamically scheduled uplink information includes at least one of the following:
a dynamically scheduled physical uplink shared channel (PUSCH);
a dynamically scheduled aperiodic channel state information (CSI) report; and
a dynamically scheduled aperiodic sounding reference signal (SRS).

The fourth type of uplink information is a hybrid automatic repeat request acknowledgement (HARQ-ACK).

Optionally, the HARQ-ACK is an HARQ-ACK for first downlink information.

Optionally, a priority of the HARQ-ACK is higher than or equal to a second level. Monitoring the HARQ-ACK with a high priority ensures that important HARQ-ACKs are obtained.

In an example, the first downlink information includes at least one of the following:
a semi-persistent scheduled physical downlink shared channel (semi-persistent scheduling physical downlink shared channel, SPS PDSCH); and
a dynamically scheduled PDSCH.

In some possible embodiments, for an SPS PDSCH, when the HARQ codebook ID is configured to 1 in the SPS PDSCH, it is indicated that the HARQ-ACK corresponding to the SPS PDSCH is an HARQ-ACK with a high priority.

In some possible embodiments, for a PDSCH dynamically scheduled via a downlink control information (DCI), if the priority indicator field in the DCI is indicated to 1, it is indicated that the HARQ-ACK corresponding to the PDSCH is an HARQ-ACK with a high priority.

In the embodiments of the present disclosure, during the DRX first duration of the first carrier, the network device, in accordance with the energy-saving purpose of the DRX design, does not monitor a portion of uplink information while ensuring the monitoring of the first uplink information. This prevents the inability to receive the first uplink information from affecting the user device, avoids the impact on the performance of the user device due to the application of the DRX, and improves the overall performance of the communication system.

The embodiments of the present disclosure provide a method for processing uplink information. The method is performed by a network device. FIG. 4 is a flowchart of a method for processing uplink information illustrated according to an exemplary embodiment. As shown in FIG. 4, the method includes S401.

At S401, second uplink information is not monitored on a first carrier during a DRX first duration of the first carrier.

In some possible embodiments, the DRX first duration of the first carrier is the DRX-Off duration of the first carrier.

In some possible embodiments, the first carrier is a single carrier, or the first carrier includes one or more carriers.

In some possible embodiments, the first carrier corresponds to an Scell.

The first carrier does not correspond to a Pcell. Since the network device needs to configure, on the Pcell, the PRACH for the idle state random access, and needs to periodically detect the PRACH, making it difficult to implement the DRX on the Pcell. Therefore, the DRX is chosen to be implemented on the Scell.

In some possible embodiments, at S401, the second uplink information may include at least one of the following three types of uplink information.

The first type of uplink information is a scheduling Request (SR).

Optionally, the scheduling request is a scheduling request with a priority lower than or equal to a first level.

By distinguishing the priorities of the scheduling requests, during the DRX first duration of the first carrier, the scheduling request with a priority lower than or equal to the first level is not monitored, achieving the energy-saving purpose of the DRX.

The second type of uplink information is periodic uplink information.

In an example, the periodic uplink information includes at least one of the following:
a periodic CSI report;
a periodic type 1 configured grant physical uplink shared channel (CG-PUSCH), i.e., type1 CG-PUSCH; and
a periodic SRS.

The third type of uplink information is semi-persistent uplink information.

Optionally, a transmission scheduling of the semi-persistent uplink information has been activated by the network device prior to the DRX first duration of the first carrier.

In an example, the semi-persistent uplink information includes at least one of the following:
a periodic type 2 CG-PUSCH, i.e., type2 CG-PUSCH;
a semi-persistent SRS; and
a semi-persistent CSI report.

In some possible embodiments, during the DRX first duration of the first carrier, the network device does not activate the semi-persistent uplink information on the first carrier, making it impossible for the user device to send the semi-persistent uplink information during the DRX first duration of the first carrier. Correspondingly, the network device does not monitor the semi-persistent uplink information during the DRX first duration of the first carrier.

In the embodiments of the present disclosure, the network device does not monitor the second uplink information during the DRX first duration of the first carrier, achieving the energy-saving effect by not receiving the second uplink information, which has a relatively small impact on the user device.

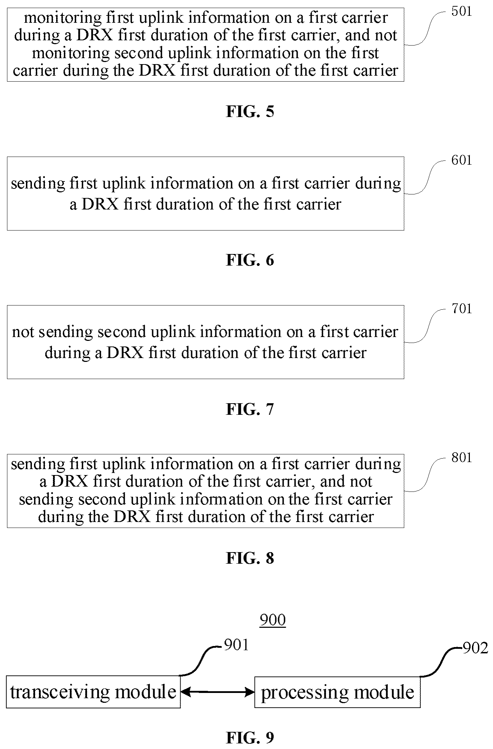

The embodiments of the present disclosure provide a method for processing uplink information. The method is performed by a network device. FIG. 5 is a flowchart of a method for processing uplink information illustrated according to an exemplary embodiment. As shown in FIG. 5, the method includes S501.

At S501, first uplink information is sent on a first carrier during a DRX first duration of the first carrier, and second unlink information is not sent on the first carrier during the DRX first duration of the first carrier.

In this embodiment, during the DRX first duration of the first carrier, the content of sending the first uplink information on the first carrier is the same as the content at S501, see S501, and during the DRX first duration of the first carrier, the content of not sending the second uplink information on the first carrier is the same as the content at S501, see S501.

The embodiments of the present disclosure provide a method for sending uplink information. The method is performed by a user device. FIG. 6 is a flowchart of a method for sending uplink information illustrated according to an exemplary embodiment. As shown in FIG. 6, the method includes S601.

At S601, first uplink information is sent on a first carrier during a DRX first duration of the first carrier.

In some possible embodiments, the DRX first duration of the first carrier is the DRX-Off duration of the first carrier.

In some possible embodiments, the first carrier is a single carrier, or the first carrier includes one or more carriers.

In some possible embodiments, the first carrier corresponds to an Scell.

The first carrier does not correspond to a Pcell. Since the network device needs to configure, on the Pcell, the PRACH for the idle state random access, and needs to periodically detect the PRACH, making it difficult to implement the DRX on the Pcell. Therefore, the DRX is chosen to be implemented on the Scell.

In some possible embodiments, at S601, the first uplink information may include at least one of the following four types of uplink information.

The first type of uplink information is a PRACH.

Optionally, the PRACH is used for performing beam failure recovery on the first carrier.

The second type of uplink information is a scheduling request (SR).

Optionally, the scheduling request is a scheduling request with a priority higher than a first level.

By distinguishing the priorities of the scheduling requests, during the DRX first duration of the first carrier, the scheduling request with a priority higher than the first level is sent, ensuring that the important scheduling is carried out normally through allowing the transmission of the scheduling request with a high priority.

The third type of uplink information is dynamically scheduled uplink information.

In an example, the dynamically scheduled uplink information includes at least one of the following:
a dynamically scheduled PUSCH;
a dynamically scheduled aperiodic CSI report; and
a dynamically scheduled aperiodic SRS.

The fourth type of uplink information is an HARQ-ACK.

Optionally, the HARQ-ACK is an HARQ-ACK for first downlink information.

Optionally, a priority of the HARQ-ACK is higher than or equal to a second level. Sending the HARQ-ACK with a high priority ensures that important HARQ-ACKs can be reported.

In an example, the first downlink information includes at least one of the following:
an SPS PDSCH; and
a dynamically scheduled PDSCH.

In some possible embodiments, for an SPS PDSCH, when the HARQ codebook ID is configured to 1 in the SPS PDSCH, it is indicated that the HARQ-ACK corresponding to the SPS PDSCH is an HARQ-ACK with a high priority.

In some possible embodiments, for a PDSCH dynamically scheduled via a DCI, if the priority indicator field in the DCI is indicated to 1, it is indicated that the HARQ-ACK corresponding to the PDSCH is an HARQ-ACK with a high priority.

In the embodiments of the present disclosure, corresponding to the network device monitoring the first uplink information during the DRX first duration of the first carrier, the user device sends the first uplink information during the DRX first duration of the first carrier, ensuring the normal transmission of the first uplink information, avoiding the impact on the performance of the user device due to the application of the DRX, and improving the overall performance of the communication system.

The embodiments of the present disclosure provide a method for processing uplink information. The method is performed by a user device. FIG. 7 is a flowchart of a method for processing uplink information illustrated according to an exemplary embodiment. As shown in FIG. 7, the method includes S701.

At S701, second uplink information is not sent on a first carrier during a DRX first duration of the first carrier.

In some possible embodiments, the DRX first duration of the first carrier is the DRX-Off duration of the first carrier.

In some possible embodiments, the first carrier is a single carrier, or the first carrier includes one or more carriers.

In some possible embodiments, the first carrier corresponds to an Scell.

The first carrier does not correspond to a Pcell. Since the network device needs to configure, on the Pcell, the PRACH for the idle state random access, and needs to periodically detect the PRACH, making it difficult to implement the DRX on the Pcell. Therefore, the DRX is chosen to be implemented on the Scell.

In some possible embodiments, at S701, the second uplink information may include at least one of the following three types of uplink information.

The first type of uplink information is a scheduling Request (SR).

Optionally, the scheduling request is a scheduling request with a priority lower than or equal to a first level.

By distinguishing the priorities of the scheduling requests, during the DRX first duration of the first carrier, the scheduling request with a priority lower than or equal to the first level is not sent, achieving the energy-saving purpose of the DRX.

The second type of uplink information is periodic uplink information.

In an example, the periodic uplink information includes at least one of the following:
a periodic CSI report;
a periodic type 1 CG-PUSCH, i.e., type1 CG-PUSCH; and
a periodic SRS.

The third type of uplink information is semi-persistent uplink information.

Optionally, a transmission scheduling of the semi-persistent uplink information has been activated by the network device prior to the DRX first duration of the first carrier.

Optionally, the user device determines that the transmission scheduling of the semi-persistent uplink information during the DRX first duration of the first carrier is deactivated, and the transmission scheduling of the semi-persistent uplink information has been activated by the network device prior to the DRX first duration of the first carrier. That is, for the transmission scheduling of the semi-persistent uplink information that has been activated prior to the DRX first duration of the first carrier, the user device treats it as having been deactivated during the DRX first duration of the first carrier, and does not send the semi-persistent uplink information during the DRX first duration of the first carrier.

In an example, the semi-persistent uplink information includes at least one of the following:
a type 2 CG-PUSCH, i.e., type2 CG-PUSCH;
a semi-persistent SRS; and
a semi-persistent CSI report.

In the embodiments of the present disclosure, the user device does not send the second uplink information during the DRX first duration of the first carrier, achieving the energy-saving effect by not sending the second uplink information, which has a relatively small impact on the user device.

The embodiments of the present disclosure provide a method for processing uplink information. The method is performed by a user device. FIG. 8 is a flowchart of a method for processing uplink information illustrated according to an exemplary embodiment. As shown in FIG. 8, the method includes S801.

At S801, first uplink information is sent on a first carrier during a DRX first duration of the first carrier, and second unlink information is not sent on the first carrier during the DRX first duration of the first carrier.

In this embodiment, during the DRX first duration of the first carrier, the content of sending the first uplink information on the first carrier is the same as the content at S801, see S801, and during the DRX first duration of the first carrier, the content of not sending the second uplink information on the first carrier is the same as the content at S801, see S801.

Based on the same idea as the above method embodiments, the embodiments of the present disclosure further provide a communication device. The communication device may have the function of the network device in the above method embodiments, and may be configured to perform the steps executed by the network device provided in the above embodiments. The function may be implemented by hardware, or may be implemented by software or hardware executing corresponding software. The hardware or software includes one or more modules corresponding to the above-described functions.

In a possible implementation, the electronic device 900 as shown in FIG. 9 may serve as the network device involved in the above method embodiments, and perform the steps executed by the network device in the above method embodiments corresponding to FIG. 3 and/or FIG. 4.

The communication device 900 includes a transceiving module 901 and a processing module 902.

In performing the method embodiment corresponding to FIG. 3, the transceiving module 901 is configured to monitor first uplink information on a first carrier during a DRX first duration of the first carrier.

In some possible embodiments, the first uplink information includes a PRACH, and the PRACH is used for performing beam failure recovery on the first carrier.

In some possible embodiments, the first uplink information includes a scheduling request.

In some possible embodiments, a priority of the scheduling request is higher than a first level.

In some possible embodiments, the first uplink information includes dynamically scheduled uplink information.

In some possible embodiments, the dynamically scheduled uplink information includes at least one of:
a dynamically scheduled PUSCH;
a dynamically scheduled aperiodic CSI report; and
a dynamically scheduled aperiodic SRS.

In some possible embodiments, the first uplink information includes an HARQ-ACK for first downlink information.

In some possible embodiments, the first downlink information includes at least one of:
an SPS PDSCH; and
a dynamically scheduled PDSCH.

In some possible embodiments, a priority of the HARQ-ACK is higher than or equal to a second level.

In some possible embodiments, the first carrier corresponds to a secondary cell.

In performing the method embodiment corresponding to FIG. 4, the transceiving module 901 is configured to not monitor second uplink information on a first carrier during a DRX first duration of the first carrier.

In some possible embodiments, the second uplink information includes a scheduling request.

In some possible embodiments, a priority of the scheduling request is lower than or equal to a first level.

In some possible embodiments, the second uplink information includes periodic uplink information.

In some possible embodiments, the periodic uplink information includes at least one of:
a periodic CSI report;
a periodic type 1 CG-PUSCH; and
a periodic SRS.

In some possible embodiments, the second uplink information includes semi-persistent uplink information, and a transmission scheduling of the semi-persistent uplink information has been activated by the network device prior to the DRX first duration of the first carrier.

In some possible embodiments, the method includes not activating the semi-persistent uplink information on the first carrier during the DRX first duration of the first carrier.

In some possible embodiments, the semi-persistent uplink information includes at least one of:
a type 2 CG-PUSCH;
a semi-persistent SRS; and
a semi-persistent CSI report.

In some possible embodiments, the first carrier corresponds to a secondary cell.

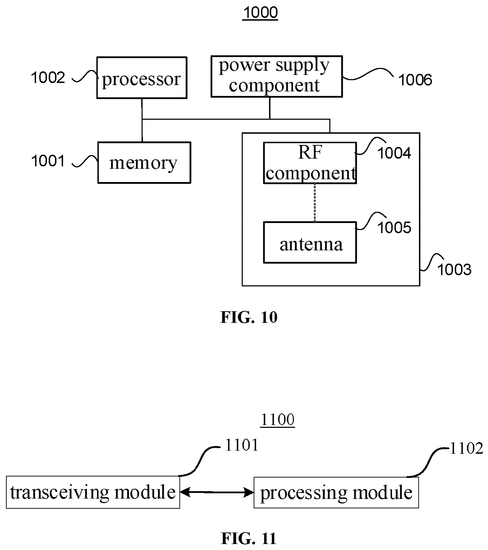

The structure of the communication device may also be shown in FIG. 10. As shown in FIG. 10, the device 1000 includes a memory 1001, a processor 1002, a transceiving component 1003, and a power supply component 1006. The memory 1001 is coupled to the processor 1002, and may be configured to store programs and data necessary for the communication device 1000 to implement various functions. The processor 1002 is configured to support the communication device 1000 in performing the corresponding function in the above methods, and the function may be implemented by invoking a program stored in the memory 1001. The transceiving component 1003 may be a wireless transceiver that may be configured to support the communication device 1000 in performing, via a wireless air interface, receiving signaling and/or data, and sending signaling and/or data. The transceiving component 1003 may also be referred to as a transceiving unit or a communication unit. The transceiving component 1003 may include a radio frequency (RF) component 1004 and one or more antennas 1005, where the RF component 1004 may be a remote radio unit (RRU), which may be specifically configured for transmission of RF signals and conversion between RF signals and baseband signals. The one or more antennas 1005 may be specifically configured to perform radiation and reception of RF signals.

When the communication device 1000 needs to send data, the processor 1002, after performing baseband processing on the data to be sent, may output a baseband signal to an RF unit, and the RF unit, after performing RF processing on the baseband signal, sends the RF signal in the form of electromagnetic waves through the antenna. When there is data sent to the communication device 1000, the RF unit receives an RF signal through the antenna, converts the RF signal to a baseband signal, and outputs the baseband signal to the processor 1002, and the processor 1002 converts the baseband signal to data and processes the data.

Based on the same idea as the above method embodiments, the embodiments of the present disclosure further provide a communication device. The communication device may have the function of the user device in the above method embodiments, and may be configured to perform the steps executed by the user device provided in the above embodiments. The function may be implemented by hardware, or may be implemented by software or hardware executing corresponding software. The hardware or software includes one or more modules corresponding to the above-described functions.

In a possible implementation, the communication device 1100 as shown in FIG. 11 may serve as the user device involved in the above method embodiments, and perform the steps executed by the network device in the above method embodiments corresponding to FIG. 6 and/or FIG. 7.

The communication device 1100 includes a transceiving module 1101 and a processing module 1102.

In performing the method embodiment corresponding to FIG. 6, the transceiving module 1101 is configured to send first uplink information on a first carrier during a DRX first duration of the first carrier.

In some possible embodiments, the first uplink information includes a PRACH, and the PRACH is used for performing beam failure recovery on the first carrier.

In some possible embodiments, the first uplink information includes a scheduling request.

In some possible embodiments, a priority of the scheduling request is higher than a first level.

In some possible embodiments, the first uplink information includes dynamically scheduled uplink information.

In some possible embodiments, the dynamically scheduled uplink information includes at least one of:
a dynamically scheduled PUSCH;
a dynamically scheduled aperiodic CSI report; and
a dynamically scheduled aperiodic SRS.

In some possible embodiments, the first uplink information includes an HARQ-ACK for first downlink information.

In some possible embodiments, the first downlink information includes at least one of:
an SPS PDSCH; and
a dynamically scheduled PDSCH.

In some possible embodiments, a priority of the HARQ-ACK is higher than or equal to a second level.

In some possible embodiments, the first carrier corresponds to a secondary cell.

In performing the method embodiment corresponding to FIG. 7, the transceiving module 1101 is configured to not send second uplink information on a first carrier during a DRX first duration of the first carrier.

In some possible embodiments, the second uplink information includes a scheduling request.

In some possible embodiments, a priority of the scheduling request is lower than or equal to a first level.

In some possible embodiments, the second uplink information includes periodic uplink information.

In some possible embodiments, the periodic uplink information includes at least one of:
a periodic CSI report;
a periodic type 1 CG-PUSCH; and
a periodic SRS.

In some possible embodiments, the second uplink information includes semi-persistent uplink information, and a transmission scheduling of the semi-persistent uplink information has been activated by a network device prior to the DRX first duration of the first carrier.

In some possible embodiments, the processing module 1102 is configured to determine that a transmission scheduling of the semi-persistent uplink information during the DRX first duration of the first carrier is deactivated.

In some possible embodiments, the semi-persistent uplink information includes at least one of:
a type 2 CG-PUSCH;
a semi-persistent SRS; and
a semi-persistent CSI report.

In some possible embodiments, the first carrier corresponds to a secondary cell.

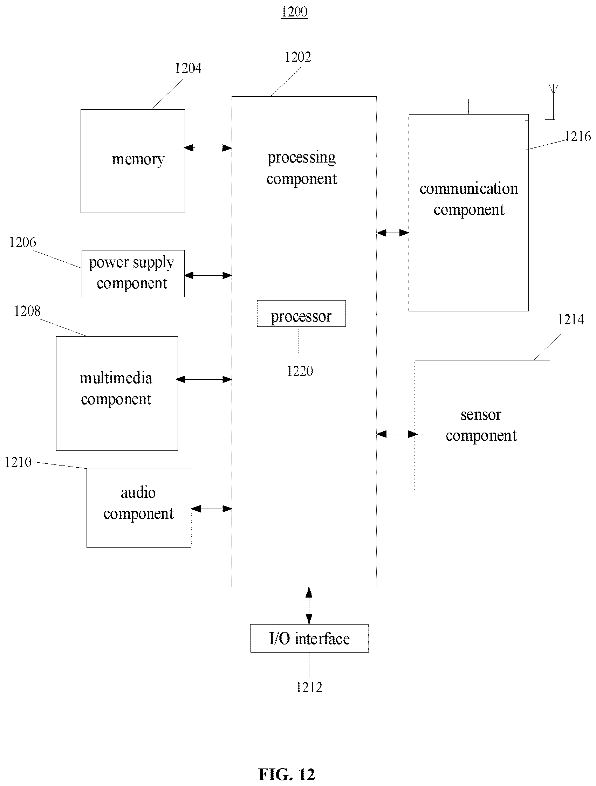

The structure of the communication device may also be shown in FIG. 12. For example, the device 1200 may be a mobile phone, a computer, a digital broadcast terminal, a message transceiving device, a game console, a tablet device, a medical device, a fitness device, or a personal digital assistant, etc.

Referring to FIG. 12, the device 1200 may include one or more of the following components: a processing component 1202, a memory 1204, a power supply component 1206, a multimedia component 1208, an audio component 1210, an input/output (I/O) interface 1212, a sensor component 1214, and a communication component 1216.

The processing component 1202 generally controls an overall operation of the device 1200, such as operations associated with display, telephone calls, data communication, camera operations, and recording operations. The processing component 1202 may include one or more processors 1220 to execute an instruction, thereby completing all or a portion of the steps of the methods described above. In addition, the processing component 1202 may include one or more modules that facilitate interaction between the processing component 1202 and other components. For example, the processing component 1202 may include a multimedia module to facilitate interaction between the multimedia component 1208 and the processing component 1202.

The memory 1204 is configured to store various types of data to support operations at the device 1200. Examples of such data include the following for any application program or method operated on the device 1200: instructions, contact data, phonebook data, messages, pictures, videos, etc. The memory 1204 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 1206 supplies power to various components of the device 1200. The power supply component 1206 may include a power supply management system, one or more power supplies, and other components associated with generating, managing and distributing power for the device 1200.

The multimedia component 1208 includes a screen that provides an output interface between the device 1200 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 1208 includes a front-facing camera and/or a rear-facing camera. The front-facing camera and/or the rear-facing camera may receive external multimedia data when the device 1200 is in an operating mode, such as a shooting mode or a video mode. Each of the front-facing camera and the rear-facing camera may be a fixed optical lens system or have a focal length and optical zoom capability.

The audio component 1210 is configured to output and/or input audio signals. For example, the audio component 1210 includes a microphone (MIC). When the device 1200 is in an operating mode, such as a calling mode, a recording mode and a voice recognition mode, the MIC is configured to receive external audio signals. The received audio signals may be further stored in the memory 1204 or sent via the communication component 1216. In some embodiments, the audio component 1210 further includes a speaker for outputting the audio signals.

The I/O interface 1212 provides an interface between the processing component 1202 and a peripheral interface module. The peripheral interface module described above may be a keypad, a click wheel, a button, etc. These buttons may include, but are not limited to, a home button, a volume button, a start button, and a lock button.

The sensor component 1214 includes one or more sensors configured to provide status assessment for various aspects of the device 1200. For example, the sensor component 1214 may detect an open/closed state of the device 1200, relative positioning of the components, for example, the components are the display and small keypad of the device 1200; the sensor component 1214 may also detect a change in the position of the device 1200 or a change in the position of one component of the device 1200, the presence or absence of contact between the user and the device 1200, the orientation or acceleration/deceleration of the device 1200, and temperature changes of the device 1200. The sensor component 1214 may include a proximity sensor that is configured to detect the presence of nearby objects in the absence of any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate the communication between the device 1200 and other devices by wired or wireless means. The device 1200 may access a wireless network based on a communication standard, such as WiFi, 4G, 5G, or a combination thereof. In an exemplary embodiment, the communication component 1216 receives broadcast signals or broadcast related information from an external broadcast management system via a broadcast channel. In an exemplary embodiment, the communication component 1216 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, and the other technology.

In an exemplary embodiment, the device 1200 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, for performing the above methods.

In an exemplary embodiment, a non-transitory computer-readable storage medium including an instruction is also provided, such as the memory 1204 including an instruction. The instruction described above is capable of being executed by the processor 1220 of the device 1200 to complete the above methods. For example, the non-transitory computer-readable storage medium may be an ROM, a random access memory (RAM), a CD-ROM, a magnetic tape, a floppy disk, or an optical data storage device, etc.

The embodiments of the present disclosure provide a computer-readable storage medium. The computer-readable storage medium stores an instruction, where the instruction, when invoked and executed on a computer, causes the computer to perform the above methods.

After considering the specification and practicing the invention disclosed herein, those skilled in the art will easily come up with other implementation solutions of the embodiments of the present disclosure. The present application is intended to cover any variations, uses or adaptive changes of the embodiments of the present disclosure, and the variations, uses or adaptive changes follow the general principles of the embodiments of the present disclosure and include common knowledge or commonly used technical means in the art that is not disclosed in the present disclosure. The specification and embodiments are only considered to be exemplary, and the true scope and spirit of the embodiments of the present disclosure are indicated by the following claims.

It should be understood that the embodiments of the present disclosure are not limited to the precise structure which has been described above and illustrated in the accompanying drawings, and that various modifications and alterations may be made without departing from the scope of the embodiments of the present disclosure. The scope of the embodiments of the present disclosure is limited only by the appended claims.

### INDUSTRIAL APPLICABILITY

During the DRX first duration of the first carrier, the network device, in accordance with the energy-saving purpose of the DRX design, does not monitor a portion of uplink information while ensuring the monitoring of the first uplink information. This prevents the inability to receive the first uplink information from affecting the user device, avoids the impact on the performance of the user device due to the application of the DRX, and improves the overall performance of the communication system.

## Claims

1. A method for monitoring uplink information, performed by a network device, wherein the method comprises:
monitoring first uplink information on a first carrier during a discontinuous reception (DRX) first duration of the first carrier.

2. The method according to claim 1, wherein the first uplink information comprises a physical random access channel (PRACH), and the PRACH is used for performing beam failure recovery on the first carrier.

3. The method according to claim 1 or 2, wherein the first uplink information comprises a scheduling request.

4. The method according to claim 3, wherein a priority of the scheduling request is higher than a first level.

5. The method according to any one of claims 1 to 4, wherein the first uplink information comprises dynamically scheduled uplink information.

6. The method according to claim 5, wherein the dynamically scheduled uplink information comprises at least one of:
a dynamically scheduled physical uplink shared channel (PUSCH);
a dynamically scheduled aperiodic channel state information (CSI) report; and
a dynamically scheduled aperiodic sounding reference signal (SRS).

7. The method according to any one of claims 1 to 6, wherein the first uplink information comprises:
a hybrid automatic repeat request acknowledgement (HARQ-ACK) for first downlink information.

8. The method according to claim 7, wherein the first downlink information comprises at least one of:
a semi-persistent scheduled physical downlink shared channel (SPS PDSCH); and
a dynamically scheduled PDSCH.

9. The method according to claim 7 or 8, wherein a priority of the HARQ-ACK is higher than or equal to a second level.

10. The method according to any one of claims 1 to 9, wherein the first carrier corresponds to a secondary cell.

11. A method for processing uplink information, performed by a network device, wherein the method comprises:
not monitoring second uplink information on a first carrier during a discontinuous reception (DRX) first duration of the first carrier.

12. The method according to claim 11, wherein the second uplink information comprises a scheduling request.

13. The method according to claim 12, wherein a priority of the scheduling request is lower than or equal to a first level.

14. The method according to any one of claims 10 to 13, wherein the second uplink information comprises periodic uplink information.

15. The method according to claim 14, wherein the periodic uplink information comprises at least one of:
a periodic channel state information (CSI) report;
a periodic type 1 configured grant physical uplink shared channel (CG-PUSCH); and
a periodic sounding reference signal (SRS).

16. The method according to any one of claims 11 to 15, wherein the second uplink information comprises semi-persistent uplink information, and a transmission scheduling of the semi-persistent uplink information has been activated by the network device prior to the DRX first duration of the first carrier.

17. The method according to claim 16, wherein the method comprises:
not activating the semi-persistent uplink information on the first carrier during the DRX first duration of the first carrier.

18. The method according to claim 11 or 17, wherein the semi-persistent uplink information comprises at least one of:
a type 2 CG-PUSCH;
a semi-persistent SRS; and
a semi-persistent CSI report.

19. The method according to any one of claims 11 to 17, wherein the first carrier corresponds to a secondary cell.

20. A method for sending uplink information, performed by a user device, wherein the method comprises:
sending first uplink information on a first carrier during a discontinuous reception (DRX) first duration of the first carrier.

21. The method according to claim 20, wherein the first uplink information comprises a physical random access channel (PRACH), and the PRACH is used for performing beam failure recovery on the first carrier.

22. The method according to claim 20 or 21, wherein the first uplink information comprises a scheduling request.

23. The method according to claim 22, wherein a priority of the scheduling request is higher than a first level.

24. The method according to any one of claims 20 to 23, wherein the first uplink information comprises dynamically scheduled uplink information.

25. The method according to claim 24, wherein the dynamically scheduled uplink information comprises at least one of:
a dynamically scheduled physical uplink shared channel (PUSCH);
a dynamically scheduled aperiodic channel state information (CSI) report; and
a dynamically scheduled aperiodic sounding reference signal (SRS).

26. The method according to any one of claims 20 to 25, wherein the first uplink information comprises:
a hybrid automatic repeat request acknowledgement (HARQ-ACK) for first downlink information.

27. The method according to claim 26, wherein the first downlink information comprises at least one of:
a semi-persistent scheduled physical downlink shared channel (SPS PDSCH); and
a dynamically scheduled PDSCH.

28. The method according to claim 26 or 27, wherein a priority of the HARQ-ACK is higher than or equal to a second level.

29. The method according to any one of claims 26 to 28, wherein the first carrier corresponds to a secondary cell.

30. A processing method, performed by a user device, wherein the method comprises:
not sending second uplink information on a first carrier during a discontinuous reception (DRX) first duration of the first carrier.

31. The method according to claim 30, wherein the second uplink information comprises a scheduling request.

32. The method according to claim 31, wherein a priority of the scheduling request is lower than or equal to a first level.

33. The method according to any one of claims 30 to 32, wherein the second uplink information comprises periodic uplink information.

34. The method according to claim 33, wherein the periodic uplink information comprises at least one of:
a periodic channel state information (CSI) report;
a periodic type 1 configured grant physical uplink shared channel (CG-PUSCH); and
a periodic sounding reference signal (SRS).

35. The method according to any one of claims 30 to 34, wherein the second uplink information comprises semi-persistent uplink information, and a transmission scheduling of the semi-persistent uplink information has been activated by a network device prior to the DRX first duration of the first carrier.

36. The method according to claim 35, wherein the method comprises:
determining that a transmission scheduling of the semi-persistent uplink information during the DRX first duration of the first carrier is deactivated.

37. The method according to claim 35 or 36, wherein the semi-persistent uplink information comprises at least one of:
a type 2 CG-PUSCH;
a semi-persistent SRS; and
a semi-persistent CSI report.

38. The method according to any one of claims 30 to 37, wherein the first carrier corresponds to a secondary cell.

39. An apparatus for monitoring uplink information, configured in a network device, wherein the apparatus comprises:
a transceiving module, configured to monitor first uplink information on a first carrier during a discontinuous reception (DRX) first duration of the first carrier.

40. A processing apparatus, configured in a network device, wherein the apparatus comprises:
a transceiving module, configured to not monitor second uplink information on a first carrier during a discontinuous reception (DRX) first duration of the first carrier.

41. An apparatus for sending uplink information, configured in a user device, wherein the apparatus comprises:
a transceiving module, configured to send first uplink information on a first carrier during a discontinuous reception (DRX) first duration of the first carrier.

42. A processing apparatus, configured in a user device, wherein the apparatus comprises:
a transceiving module, configured to not send second uplink information on a first carrier during a discontinuous reception (DRX) first duration of the first carrier.

43. An electronic device, comprising a processor and a memory, wherein
the memory is configured to store a computer program; and
the processor is configured to execute the computer program to implement the method according to any one of claims 1 to 10 or any one of claims 11 to 19.

44. An electronic device, comprising a processor and a memory, wherein
the memory is configured to store a computer program; and
the processor is configured to execute the computer program to implement the method according to any one of claims 20 to 29 or any one of claims 30 to 38.

45. A computer-readable storage medium, wherein the computer-readable storage medium stores an instruction that, when invoked and executed on a computer, causes the computer to perform the method according to any one of claims 1 to 10 or any one of claims 11 to 19.

46. A computer-readable storage medium, wherein the computer-readable storage medium stores an instruction that, when invoked and executed on a computer, causes the computer to perform the method according to any one of claims 20 to 29 or any one of claims 30 to 38.
